# EUROPEAN PATENT APPLICATION

(11) **EP 4 640 380 A1**
(43) Date of publication of application: **29.10.2025**
(21) Application number: 22969216.5
(22) Date of filing: 22.12.2022
(51) Int. Cl.: B25J 13/08

(54) **CONTROL DEVICE, FOREIGN OBJECT REMOVING DEVICE, COLLECTING DEVICE, AND COLLECTING DEVICE CONTROL METHOD**

(71) Applicant: Fuji Corporation, Chiryu-shi, Aichi 472-8686 (JP)
(72) Inventor: KONDO, Hironori, Chiryu-shi, Aichi 472-8686 (JP)
(74) Representative: Grünecker Patent- und Rechtsanwälte PartG mbB
(86) International application number: PCT/JP2022/047373
(87) International publication number: WO 2024/134830

(57) **Abstract**

A control device of the present disclosure is used in a collecting device including a collection section configured to collect a target object with a collection member, and a detection section configured to detect the target object and a periphery of the target object. The control device includes a control section configured to control the collection section such that a height of the periphery of the target object detected by the detection section is acquired and the target object is collected at a rotation angle of the collection member determined according to a position at which the height of the periphery is lower.

## Description

### Technical Field

The present description discloses a control device, a foreign object removing device, a collecting device, and a collecting device control method.

### Background Art

Conventionally, as a collecting device that collects a target object, for example, there has been proposed a collecting device including a picking robot that conveys a target object from a conveyance source to a conveyance destination, and a robot hand that is connected to the picking robot and grips the target object, in which the robot hand includes a suction pad that sucks the target object, and a clamping section that clamps the target object sucked by the suction pad (for example, refer to Patent Literature 1). It is described that, in the collecting device, it is possible to more efficiently perform a sorting process on an electronic component scrap.

### Citation List

### Patent Literature

Patent Literature 1:JP-A-2021-186321

### Summary of the Invention

### Technical Problem

It is described that, in the device of Patent Literature 1, the suction pad and a gripping hand are provided, it is possible to automatically sort the target object, and it is possible to execute a more reliable collection process, but it is not sufficiently considered to more reliably collect the target object.

The present disclosure has been made to solve such a problem, and a main object of the present disclosure is to provide a control device, a foreign object removing device, a collecting device, and a collecting device control method with which it is possible to more reliably collect a target object.

The present disclosure employs the following means in order to achieve the object described above.

That is, a control device of the present disclosure is,
a control device for use in a collecting device including a collection section configured to collect a target object with a collection member, and a detection section configured to detect the target object and a periphery of the target object, the control device including:
a control section configured to control the collection section such that a height of the periphery of the target object detected by the detection section is acquired and the target object is collected at a rotation angle of the collection member determined according to a position at which the height of the periphery is lower.

Since the control device determines the rotation angle of the collection member according to the position at which the height of the periphery, which is an obstacle when the target object is collected by the collection member, is lower, it is possible to collect the target object while further reducing influence of the peripheral obstacle. Therefore, in the control device, it is possible to more reliably collect the target object by taking the peripheral obstacle into consideration.

### Brief Description of Drawings

Fig. 1 is a view showing an example of a configuration of recycling system 10.
Fig. 2 is a view showing an example of a schematic configuration of foreign object removing device 30.
Fig. 3 is a perspective view showing an example of a schematic configuration of removal section 40.
Fig. 4 is a view showing an example of peripheral region A and operation range P of collection member 49.
Fig. 5 is a view showing an example of peripheral region A and operation range P of collection member 49B.
Fig. 6 is a view showing an example of captured images 71 and 82 of detection section 31.
Fig. 7 is a flowchart showing an example of a foreign object removal process routine.
Fig. 8 is a view showing an example of setting rotation angle θ of collection member 49.
Fig. 9 is a view showing an example of a collection process of collection member 49 for foreign object 14.
Fig. 10 is a view showing an example of setting rotation angle θ of collection member 49B.

### Description of Embodiments

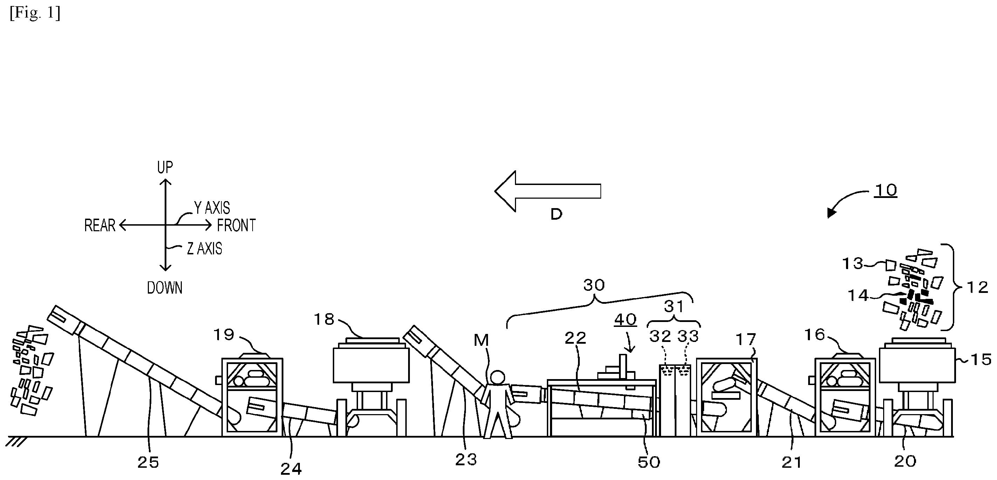

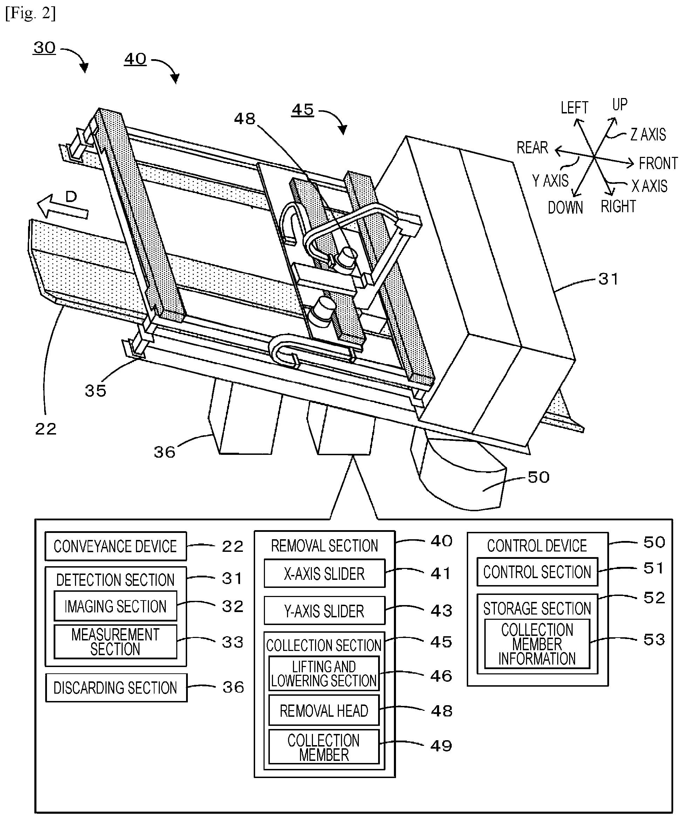

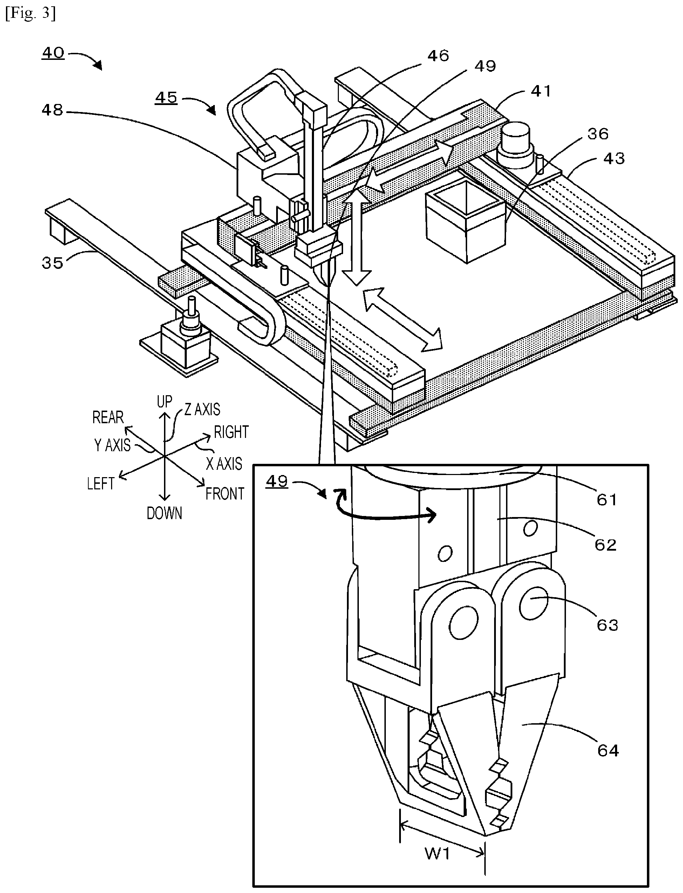

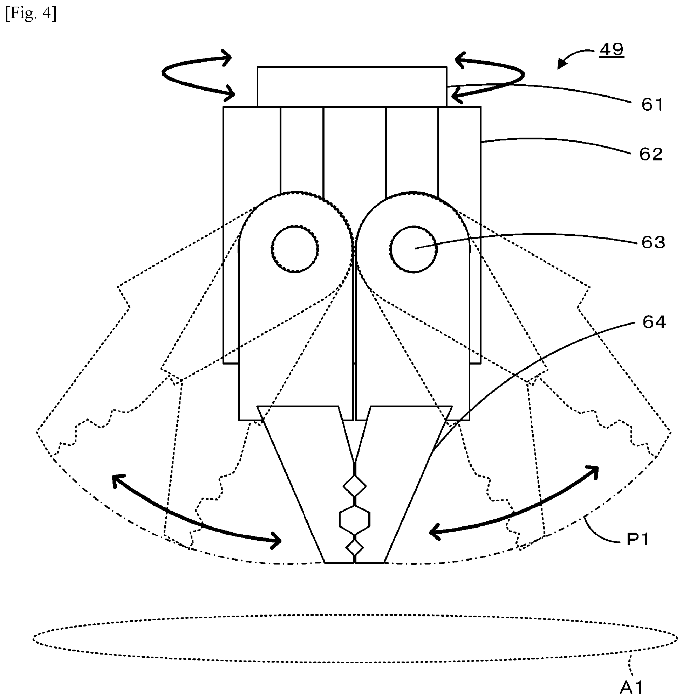

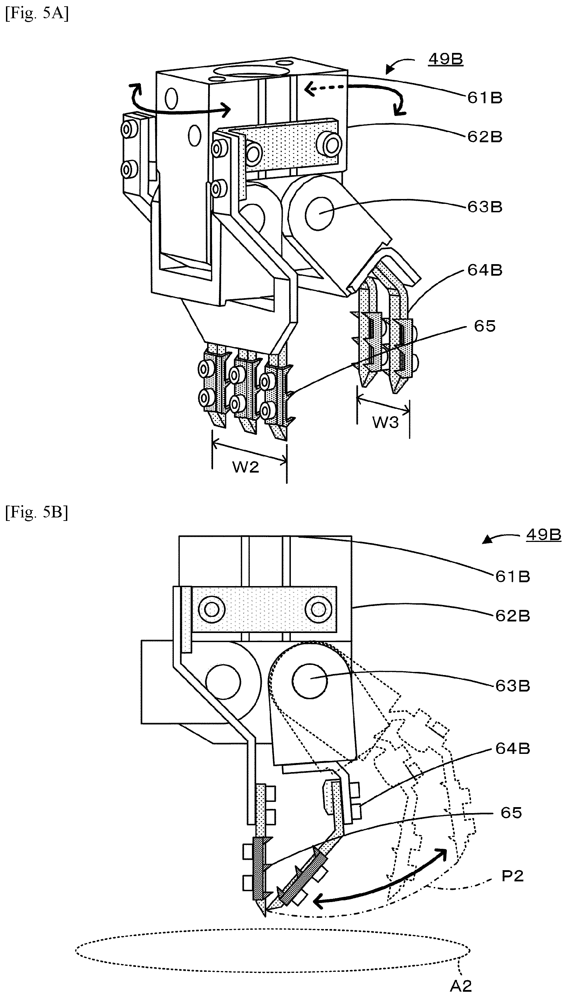

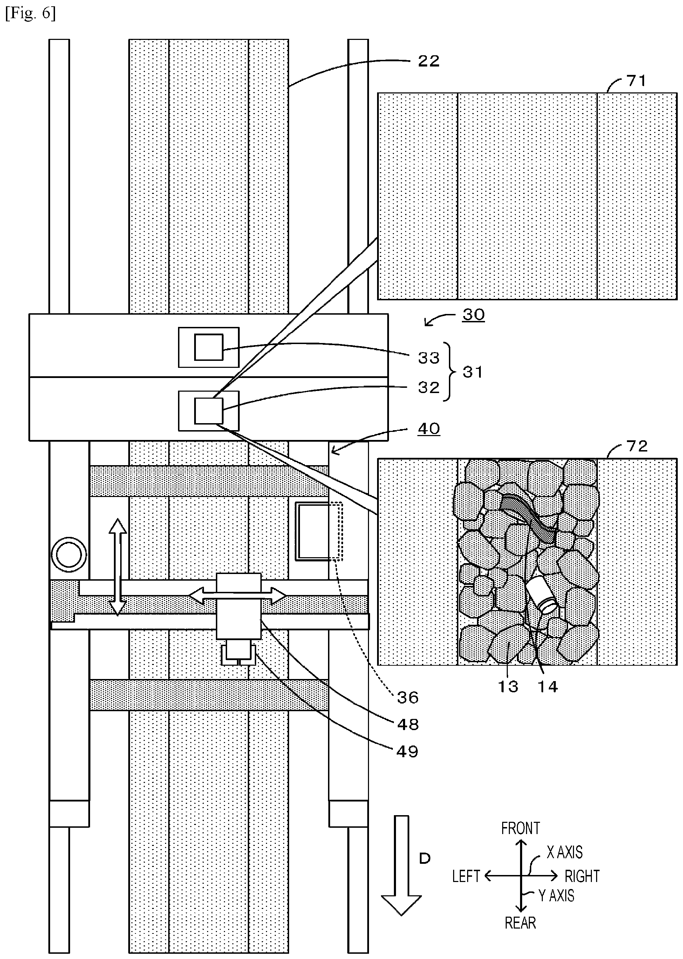

An embodiment of the present disclosure will be described with reference to the accompanying drawings. Fig. 1 is a view showing an example of a configuration of recycling system 10 for recycling a waste material, which is shown as an example of a collection system. Fig. 2 is a view showing an example of a schematic configuration of foreign object removing device 30. Fig. 3 is a perspective view showing an example of a schematic configuration of removal section 40. Fig. 4 is a view showing an example of peripheral region A and operation range Pa of collection member 49. Fig. 5 is a view showing an example of peripheral region A and operation range P of collection member 49B, in which Fig. 5A is a perspective view, and Fig. 5B is a view of operation range Pb. Fig. 6 is a view showing an example of captured images 71 and 82 captured by detection section 31. In the present embodiment, a left-right direction, a front-rear direction, and an up-down direction are as shown in Figs. 1 to 3, and 6. In the present embodiment, a direction in which process material 12 as a processing target is conveyed is referred to as conveyance direction D.

Process material 12 as a target object that is processed by recycling system 10 is a mixture obtained by mixing waste material 13, which is a target for recycling such as stone, sand, and concrete, with foreign object 14 including paper, resin, wood, metal, or the like. As shown in Fig. 1, recycling system 10 includes primary crusher 15, primary magnetic separator 16, screen machine 17, foreign object removing device 30, secondary crusher 18, secondary magnetic separator 19, and conveyance devices 20 to 25.

Primary crusher 15 is a device that primarily crushes process material 12 as a raw material. Primary crusher 15 crushes process material 12 such that process material 12 has a size equal to or smaller than a predetermined primary size (for example, 40 cm or less), for example. Primary magnetic separator 16 is a device that removes a foreign object which is magnetic material contained in process material 12 by means of a magnetic force. Screen machine 17 is a device that separates process material 12 having a size equal to or larger than the primary size and process material 12 having a size smaller than the primary size by process material 12 passing above a mesh, for example. Secondary crusher 18 is a device that secondarily crushes process material 12 to a size smaller than that in primary crusher 15. Secondary crusher 18 crushes process material 12 such that process material 12 has a size equal to or smaller than a predetermined secondary size (for example, 10 cm or less). Secondary magnetic separator 19 is a device that removes, from process material 12, the magnetic material not removed by primary magnetic separator 16 and foreign object removing device 30.

Conveyance devices 20 to 25 as conveyance lines are devices that place process material 12 on a conveyance surface and convey process material 12 along conveyance direction D, and are configured as, for example, belt conveyors. Conveyance devices 20 to 25 may have configurations other than the belt conveyor as long as process material 12 is conveyed.

Foreign object removing device 30 is configured as a collecting device that collects the target object, and is a device that places process material 12 on the conveyance surface of conveyance device 22, conveys process material 12 in the conveyance line, and collects and removes foreign object 14. As shown in Fig. 2, foreign object removing device 30 includes detection section 31, removal section 40, and control device 50. Foreign object removing device 30 includes discarding section 36. Conveyance device 22 places process material 12 on the conveyance surface and conveys process material 12 at a predetermined conveyance speed.

Detection section 31 is a device that detects states of waste material 13 and foreign object 14 as the target object, and a periphery of foreign object 14. Detection section 31 is disposed upstream of removal section 40 in conveyance direction D. Detection section 31 includes imaging section 32 that images process material 12 including waste material 13 and foreign object 14 conveyed by conveyance section 22, and measurement section 33 that measures a height of process material 12. Imaging section 32 is configured as, for example, a camera that captures an image of process material 12 placed on the conveyance surface of conveyance device 22 and conveyed. Imaging section 32 captures an image of a predetermined range including process material 12 from above the conveyance surface of conveyance device 22, and outputs image data to control device 50. As shown in Fig. 4, imaging section 32 captures captured images 71 and 82 including waste material 13 and foreign object 14. Captured image 71 is an example of an image in a state where process material 12 is not conveyed onto conveyance device 22. Captured image 72 is an example of an image in a state where process material 12 or foreign object 14 is conveyed onto conveyance device 22. Measurement section 33 measures the height of process material 12 or the like on conveyance device 22. For example, measurement section 33 may be provided upstream of removal section 40 in conveyance direction D, and may be configured as a stereo camera including two cameras. Alternatively, measurement section 33 may be a sensor that detects a reflected wave obtained by irradiating the conveyance surface to obtain a height of a reflection position. Imaging section 32 and measurement section 33 are held above the conveyance surface of conveyance device 22 by a holding member provided to straddle conveyance device 22 in the left-right direction. Measurement section 33 outputs information on the detected height of process material 12 to control device 50. Note that foreign object removing device 30 including measurement section 33 can perform conveyance control of process material 12 using the information on a height direction of process material 12. Meanwhile, either imaging section 32 or measurement section 33 may be omitted in foreign object removing device 30 as long as the height of process material 12 can be measured.

Discarding section 36 is a dust box as an accommodation section that accommodates foreign object 14. Foreign object 14 collected by collection section 45 of removal section 40 is dropped into discarding section 36. Note that discarding section 36 may include multiple accommodation containers and may perform separation according to the weight and material of foreign object 14.

Removal section 40 is a device that collects and removes, with collection member 49, the target object such as foreign object 14 contained in process material 12 conveyed by conveyance device 22 in conveyance direction D. Removal section 40 is configured as, for example, an XY robot. Removal section 40 detects and removes foreign object 14 present in process material 12 based on the captured image captured by imaging section 32. Removal section 40 is provided downstream of detection section 31 in conveyance direction D. Removal section 40 includes X-axis slider 41, Y-axis slider 43, and collection section 45. Removal section 40 discards collected foreign object 14 to discarding section 36 disposed on a side of conveyance device 22. Removal section 40 may have another configuration such as an articulated arm robot.

X-axis slider 41 includes a drive mechanism. The Drive mechanism includes a guide rail installed along a direction orthogonal to conveyance direction D of conveyance device 22, a slider that moves along the guide rail, and a drive motor that drives the slider. The guide rail is fixed to a slider of Y-axis slider 43 installed on conveyance section 22 along conveyance direction D. Removal head 48 provided with lifting and lowering section 46 is fixed to the slider of X-axis slider 41. In X-axis slider 41, removal head 48 is moved by the drive mechanism along an X-axis direction. Y-axis slider 43 includes a drive mechanism. The drive mechanism includes a guide rail installed along conveyance direction D, a slider that moves along the guide rail, and a drive motor that drives the slider. The guide rail is fixed to support portion 35 installed on conveyance section 22 along conveyance direction D. X-axis slider 41 is disposed on the slider of Y-axis slider 43. In Y-axis slider 43, X-axis slider 41 is moved by the drive mechanism along a Y-axis direction.

Collection section 45 is a unit that collects an object such as foreign object 14 with collection member 49, and includes, for example, lifting and lowering section 46, removal head 48, and collection member 49. Lifting and lowering section 46 is a drive mechanism fixed to removal head 48 disposed on X-axis slider 41, and lifts and lowers collection member 49 along a Z-axis direction. The drive mechanism may be a mechanism similar to the drive mechanism of X-axis slider 41 or Y-axis slider 43. A camera and/or a sensor (both not shown) may be disposed in collection section 45, and may be configured to acquire information on foreign object 14 gripped by collection member 49. Collection member 49 is a member that collects an object, and may be a member that grips an object. Alternatively, collection member 49 may be a suction nozzle that picks up an object using a negative pressure. Collection section 45 grips foreign object 14 and releases the gripping of foreign object 14 by opening and closing operations of collection member 49 to collect and remove foreign object 14 from process material 12. Collection section 45 opens and closes collection member 49 by means of a gripping drive section (not shown). Collection member 49 is moved in X, Y, and Z directions within a predetermined range of conveyance section 22 by X-axis slider 41, Y-axis slider 43, and lifting and lowering section 46.

As shown in Figs. 3 and 4, collection member 49 includes mounting section 61, base portion 62, support shaft 63, and gripping claws 64. Mounting section 61 is a section that can be connected to and disconnected from lifting and lowering section 46 of removal head 48. Base portion 62 is a main body in which mounting section 61, support shaft 63, and gripping claws 64 are disposed. Collection member 49 has rectangular parallelepiped base portion 62. Base portion 62 is provided with a drive section (not shown), and gripping claws 64 are rotated by the drive section, so that distal ends thereof are opened and closed. Collection member 49 is mounted on removal head 48 such that base portion 62 can be rotated by 360° about a vertical axis of mounting section 61. Support shaft 63 is a member that rotatably supports gripping claws 64. Support shaft 63 is axially rotated by a drive section (not shown), so that gripping claws 64 are opened and closed. Gripping claws 64 are a pair of members that grip an object. Distal ends of gripping claws 64 are formed with width Wa (refer to Fig. 3). Further, as shown in Fig. 4, in collection member 49, operation range P1 as an operation range of gripping claws 64, peripheral region A1 in which contact with gripping claws 64 is taken into consideration according to operation range P1 of gripping claws 64, and the like are defined. Operation range P1 is a range of trajectories drawn by the distal ends of gripping claws 64 when gripping claws 64 are opened and closed, and corresponds to a range in which an object can be gripped. Peripheral region A1 is determined in a region with which gripping claws 64 come into contact when base portion 62 is axially rotated and a region obtained by providing a predetermined margin in the region. In collection member 49, pair of gripping claws 64 symmetrically operate to grip the target object such as foreign object 14.

In collection member 49, pair of gripping claws 64 symmetrically operate, but for example, as shown in Fig. 5, collection member 49B including gripping claw 64B that rotates and fixed claw 65 fixed to base portion 62B may be used. Collection member 49B includes multiple gripping claws 64B and fixed claws 65 having different sizes. Collection member 49B includes mounting section 61B, base portion 62B, support shaft 63B, gripping claw 64B, and fixed claw 65. Since mounting section 61B and base portion 62B have the same configuration as mounting section 61 and base portion 62, the description thereof will be omitted. Gripping claw 64B is rotatably supported by support shaft 63B and rotates. Fixed claw 65 is fixed to base portion 62 via a stay, and does not rotate or move. Fixed claw 65 is formed with width W2, and gripping claw 64B is formed with width W3 narrower than width W2. The number of claws of gripping claws 64 may be the same as or different from the number of claws of fixed claw 65, but it is preferable that the numbers are different from each other because foreign object 14 is more easily gripped when the numbers are different from each other. Also in collection member 49B, operation range P2 of gripping claw 64B, peripheral region A2 when base portion 62B is rotated, and the like are defined. For convenience of description, widths W1 to W3 of the gripping claws, operation ranges P1 and P2, and peripheral regions A1 and A2 are collectively referred to as width W, operation range P, and peripheral region A, respectively.

Control device 50 is a device that controls entire foreign object removing device 30, and includes control section 51 and storage section 52. Control section 51 is configured as a microprocessor mainly including CPU, and controls the entire device. Control section 51 outputs control signals to detection section 31 and removal section 40, and inputs signals from detection section 31 and removal section 40. Storage section 52 is a storage medium for storing information and includes, for example, an HDD or a flash memory. Storage section 52 stores, for example, collection member information 53. Collection member information 53 includes various information on collection members 49 that collect foreign object 14 as the target object, and for example, the number and sizes (width W) of the gripping claws of collection member 49, operation range P, peripheral region A, and the like are associated with identification information. As will be described in detail later, control section 51 acquires a height of a periphery of process material 12 detected by detection section 31 using information such as collection member information 53, and controls collection section 45 such that foreign object 14 as the target object is collected at a rotation angle of collection member 49 determined according to a position at which the height of the periphery is lower.

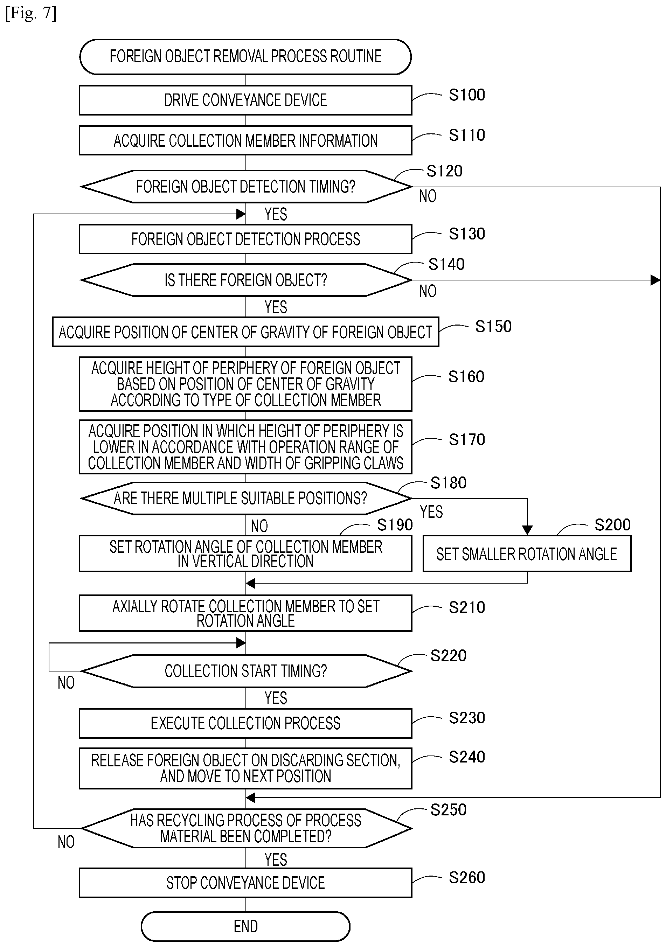

Next, an operation of foreign object removing device 30 configured as described above will be described. First, a process of removing foreign object 14 from process material 12 to produce waste material 13 will be described. Note that, in foreign object removing device 30, detection section 31 is described as a section constantly performing an imaging process of a captured image with imaging section 32 and height sensing with measurement section 33. Note that detection section 31 may appropriately perform the imaging process and the height sensing at every predetermined timing instead of constantly performing the imaging process and the height sensing. Fig. 7 is a flowchart showing an example of a foreign object removal process routine executed by control section 51 of control device 50. The routine is stored in storage section 52, and is executed by control section 51 after foreign object removing device 30 is activated. When the routine is started, control section 51 first drives conveyance device 22 (S100), and reads and acquires information on collection member 49 mounted on removal head 48 from collection member information 53 stored in storage section 52 (S 110). Control section 51 acquires information including width W of gripping claws 64 of collection member 49, and the size and shape of peripheral region A, operation range P, and the like.

Next, control section 51 determines whether it is a foreign object detection timing (S120). The foreign object detection timing may be, for example, a timing at which imaging section 32 captures all the continuous still images of process material 12 conveyed by conveyance device 22 and the still image shifts to a next image. When imaging section 32 captures a moving image, a detection timing may be a time when a certain period of time for acquiring a still image elapses. In addition, the detection timing in measurement section 33 may be, for example, every elapse of a certain time or may be the same as the detection timing of imaging section 32.

When it is the foreign object detection timing in S120, control section 51 acquires the captured image captured by imaging section 32, acquires a height value measured by measurement section 33, and performs a detection process of waste material 13 and foreign object 14 using the captured image and the height value (S130). As the detection process of process material 12, control section 51 performs, for example, a process of detecting a region having luminance different from that of the conveyance surface of conveyance device 22 and setting the region as a region of process material 12. In addition, control section 51 may obtain a region of process material 12 from the acquired height of the conveyance surface. Further, control section 51 can determine presence or absence of foreign object 14 based on, for example, whether a region of foreign object 14 having luminance different from that of waste material 13 is present in the captured image (refer to Fig. 4).

Next, control section 51 determines whether foreign object 14 is present in the captured image of conveyance device 22 (S140). When foreign object 14 is present in conveyance device 22, control section 51 acquires a position of center of gravity G of foreign object 14 through calculation (S150). For example, control section 51 can obtain a center of gravity of foreign object 14 by reading the captured image, performing binarization processing on the image, extracting a contour of foreign object 14 from the image on which the binarization processing has been performed, and calculating a center of gravity inside the contour. For example, control section 51 can geometrically obtain a point at which a primary moment around a certain figure is 0 through calculation, and set the point as the center of gravity. As calculation of a center of gravity, for example, there is a method of obtaining a center of gravity by calculating a moment based on a grayscale image, a method of obtaining a center of gravity based on a contour, or the like, and a method suitable for a device configuration need only be appropriately adopted. Since the calculation of the center of gravity is a well-known technique, a detailed description of calculation formulas and the like will be omitted here.

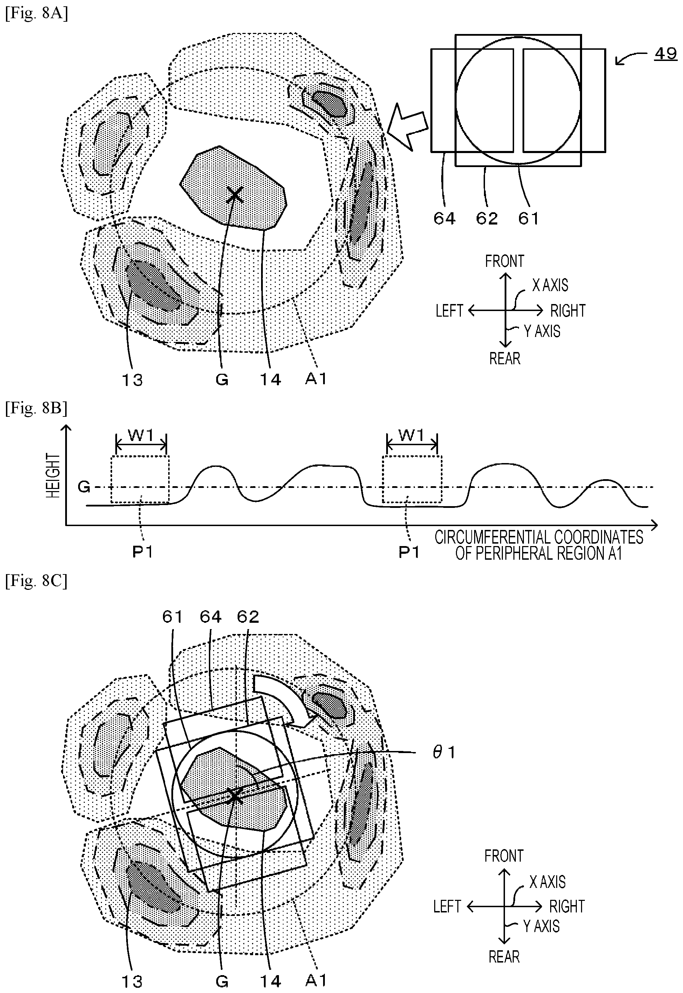

When center of gravity G of foreign object 14 is obtained, control section 51 acquires peripheral region A determined according to a type of collection member 49 mounted on removal head 48, and acquires the height of the periphery of foreign object 14 based on center of gravity G (S160). Control section 51 acquires a height of circular peripheral region A around center of gravity G of foreign object 14 from a measurement result of measurement section 33. Further, control section 51 may acquire a height of an entire region including a periphery of peripheral region A from the measurement result of measurement section 33. Fig. 8 is a view showing an example of setting rotation angle θ of collection member 49, in which Fig. 8A is a conceptual diagram of center of gravity G and the height of the periphery of foreign object 14 and collection member 49, Fig. 8B is a conceptual diagram in which a lower position is obtained, and Fig. 8C is a conceptual diagram in which collection member 49 rotated by rotation angle θ1 is disposed on foreign object 14. In Figs. 8A and 8C, the height of the periphery of foreign object 14 is indicated by contour lines. As shown in Fig. 8A, control section 51 acquires detection values of the position and height of an obstacle present in the periphery of foreign object 14.

Next, control section 51 acquires a position in which the height of the periphery is lower, in accordance with peripheral region A1 of collection member 49 and width W1 of gripping claws 64 (S170). For example, as shown in Fig. 8B, control section 51 performs a process of adjusting operation range P1 of gripping claws 64 to the height of the periphery and obtaining a position at which pair of gripping claws 64 can be at a lower height. Control section 51 sets a height of collection member 49 such that the distal ends of gripping claws 64 come to a height lower than a height of center of gravity G of foreign object 14, and in this case, control section 51 obtains a position having the height of the periphery at which an obstacle is not included in operation range P1 of gripping claws 64 as much as possible. Control section 51 may obtain such a position as rotation angle θ of collection member 49 having center of gravity G as a center. Note that, in Fig. 8B, a height of an exercise place of peripheral region A1 is shown as an example, but control section 51 performs the same process for a circumferential inside of peripheral region A1, and obtains rotation angle θ at which an obstacle is the least included in operation range P1.

Subsequently, control section 51 determines whether there are multiple suitable positions in S170 (S180), and when there are not multiple suitable positions, control section 51 sets rotation angle θ of the corresponding suitable position to a rotation position of collection member 49 in a vertical direction (S190). For example, as shown in Fig. 3, the rotation angle may be represented by an angle obtained by rotating collection member 49 in a clockwise direction with a state in which collection member 49 is positioned in front such that a rotation axis of collection member 49 is along the Y-axis direction as an initial angle of 0°. As shown in Figs. 8B and 8C, when rotation angle θ at which gripping claws 64 can be at a lowest position is uniquely determined, rotation angle θ1 is set as the rotation position of collection member 49. To the contrary, when there are multiple suitable positions in S180, the rotation position of collection member 49 is set using smaller rotation angle θ than the initial angle (S200). For example, when foreign object 14 is present in a state in which there is no obstacle in peripheral region A1, gripping claws 64 can be set to the lowest position regardless of the position at which collection member 49 is rotated. In such a case, for example, the initial angle of collection member 49 is directly set as the rotation position of collection member 49. When the rotation angle is smaller, a time for rotating collection member 49 can be further shortened.

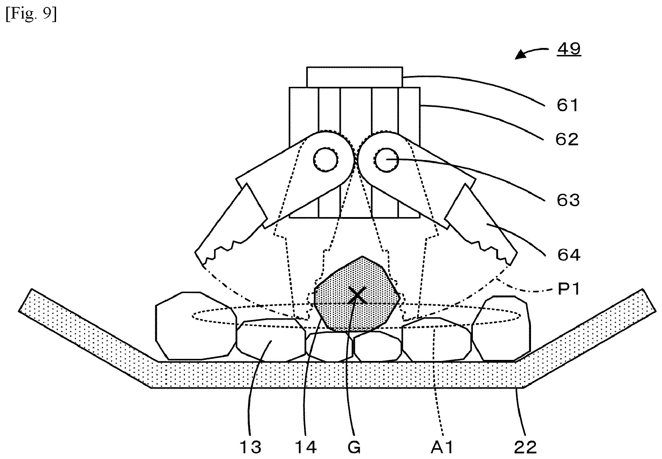

After S200 or S190, control section 51 axially rotates collection member 49 to the set rotation angle (S210), and determines whether a collection timing for collecting foreign object 14 has been reached (S220). When the collection timing has not been reached, control section 51 stands by. Control section 51 can set the collection timing based on a time during which removal head 48 moves to a space directly above foreign object 14. To the contrary, when the collection timing has been reached, control section 51 executes a process of collecting foreign object 14 (S230). In order to collect foreign object 14, for example, control section 51 moves collection member 49 along a movement path to foreign object 14, and lowers collection member 49 to grip collection member 49 with gripping claws 64. Fig. 9 is a view showing an example of the collection process of collection member 49 for foreign object 14. As shown in Fig. 9, since gripping claws 64 are rotated at a position at which the height of the obstacle is low, foreign object removing device 30 can further reduce collection of an object other than foreign object 14 and more reliably collect foreign object 14.

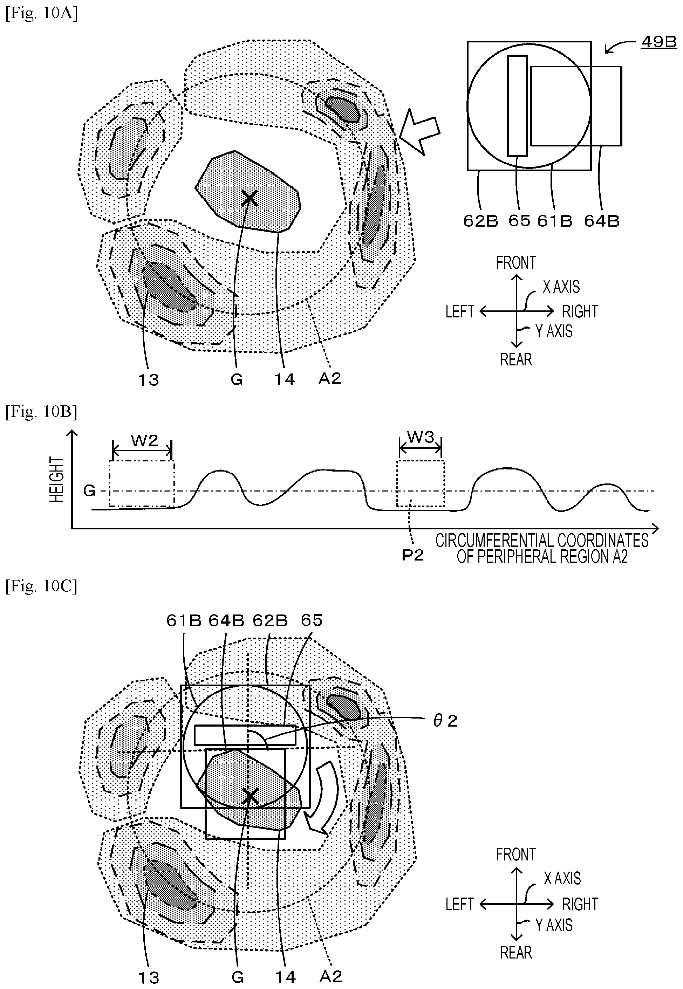

Fig. 10 is a view showing an example of setting rotation angle θ of collection member 49B, in which Fig. 10A is a conceptual diagram of center of gravity G and the height of the periphery of foreign object 14 and collection member 49B, Fig. 10B is a conceptual diagram in which a lower position is obtained, and Fig. 10C is a conceptual diagram in which collection member 49B rotated by rotation angle θ2 is disposed on foreign object 14. Also in collection member 49B, similarly to collection member 49, rotation angle θ2 of collection member 49B at which gripping claw 64B and fixed claw 65 are at lower positions can be obtained based on peripheral region A2, operation range P2, widths W1 and W2, and the like associated with collection member 49B.

Subsequently, control section 51 moves collection member 49 to discarding section 36, releases foreign object 14 on discarding section 36, and moves collection member 49 to a next position (S240). Regarding the "next position", control section 51 may move collection member 49 to an initial position when there is no foreign object 14 to be collected next, and may move collection member 49 to a position at which foreign object 14 is present when there is foreign object 14 to be collected next. After S240 or when there is no foreign object 14 in S140, control section 51 determines whether a recycling process of process material 12 has been completed (S250). When the recycling process of process material 12 has not been completed, control section 51 repeatedly executes the processes of S120 and the subsequent steps. That is, control section 51 executes a process of detecting foreign object 14, setting rotation angle θ of collection member 49, and removing foreign object 14. To the contrary, when the recycling process of process material 12 has been completed in S250, control section 51 stops conveyance device 22 (S260) and ends the routine.

Here, a correspondence relationship between the elements of the present embodiment and the elements of the present disclosure will be clarified. Control device 50 of the present embodiment corresponds to an example of a control device of the present disclosure, foreign object removing device 30 corresponds to an example of a collecting device and a foreign object removing device, collection section 45 corresponds to an example of a collection section, detection section 31 corresponds to an example of a detection section, and control section 51 corresponds to an example of a control section. Conveyance device 22 corresponds to an example of a conveyance device, and foreign object 14 corresponds to an example of a target object. In the present embodiment, an example of a collecting device control method of the present disclosure is also clarified by describing the operation of foreign object removing device 30.

Foreign object removing device 30 described above is configured as the collecting device of the present disclosure, and includes collection section 49 that collects foreign object 14 as the target object with collection member 49, foreign object 14 being included in process material 12 conveyed by conveyance device 22 in conveyance direction D, detection section 31 that is disposed upstream of collection section 45 in conveyance direction D and detects foreign object 14, and control device 50 including control section 51 that controls collection section 45 such that the height of the periphery of foreign object 14 detected by detection section 31 is acquired and foreign object 14 is collected at rotation angle θ of collection member 49 determined according to the position at which the height of the periphery is lower. Since control device 50 determines rotation angle θ of collection member 49 according to the position at which the height of the periphery, which is an obstacle when foreign object 14 is collected by collection member 49, is lower, it is possible to collect the target object while further reducing influence of the peripheral obstacle. Therefore, in control device 50, it is possible to more reliably collect foreign object 14 by taking the peripheral obstacle into consideration.

In addition, since control section 51 obtains the center of gravity of foreign object 14 and acquires the height of the periphery having the center of gravity of foreign object 14 as a center, the obstacle in the periphery of foreign object 14 is taken into consideration around the center of gravity on which gravity acts, and thus it is possible to more reliably collect foreign object 14. In addition, since control section 51 acquires the height of peripheral region A determined according to operation range P in which collection member 49 collects foreign object 14, it is possible to more reliably collect foreign object 14 in consideration of operation range P of collection member 49. Further, collection member 49B includes multiple gripping claws having different sizes, and control section 51 causes foreign object 14 to be collected at rotation angle θ of collection member 49B according to the height of peripheral region A of foreign object 14 and width W of the gripping claws. In control device 50, it is possible to more reliably collect foreign object 14 by adopting rotation angle θ in consideration of the sizes of the gripping claws. Furthermore, when there are multiple candidates for rotation angle θ of collection member 49, control section 51 adopts smaller rotation angle θ. In control device 50, it is possible to more reliably collect foreign object 14 with less operations. Further, collection member 49 includes pair of gripping claws 64, and control section 51 obtains center of gravity G of foreign object 14, acquires the height of peripheral region A having center of gravity G of foreign object 14 as a center, sets rotation angle θ of collection member 49 in accordance with a pair of positions at which the height of peripheral region A is lower, and controls collection section 45 such that collection member 49 is rotated at set rotation angle θ to collect foreign object 14. In control device 50, since foreign object 14 is collected at best rotation position θ for avoiding an obstacle in accordance with a shape of collection member 49 in consideration of the obstacle around center of gravity G on which gravity acts, it is possible to more reliably collect foreign object 14. In addition, since foreign object removing device 30 includes control device 50 described above, it is possible to more reliably collect foreign object 14 as the target object.

The present disclosure is not limited in any way to the above-described embodiment, and it is needless to say that the present disclosure can be embodied in various aspects as long as the various aspects fall within the technical scope of the present disclosure.

For example, in the above-described embodiment, control section 1 obtains center of gravity G of foreign object 14 and acquires the height of peripheral region A having center of gravity G of foreign object 14 as the center, but the present disclosure is not particularly limited thereto, and control section 1 may acquire the height of peripheral region A having a position other than center of gravity G as the center. For example, control section 51 may use a center of the image of foreign object 14 instead of center of gravity G. Also in control device 50, it is possible to more reliably collect foreign object 14 in consideration of the height of the peripheral obstacle. Control device 50 preferably uses center of gravity G from the viewpoint of stability during and after collection of foreign object 14. Further, in the above-described embodiment, the height of circular peripheral region A having center of gravity G of foreign object 14 as the center is acquired, but the shape is not particularly limited to a circular shape, and for example, the height of polygonal or elliptical peripheral region A may be acquired. When rotation angle θ is defined in multiple stages, peripheral region A may be hexagonal, octagonal, dodecagonal, or the like.

In the above-described embodiment, the height of peripheral region A determined according to operation range P in which collection member 49 collects foreign object 14 is acquired, but the present disclosure is not particularly limited thereto, and peripheral region A in which operation range P is not considered may be used. Control device 50 preferably uses peripheral region A according to operation range P from the viewpoint of contact between collection member 49 and an obstacle.

When there are multiple candidates for rotation angle θ of collection member 49, control section 51 employs a smaller rotation angle, but the present invention is not particularly limited thereto, and the process may be omitted. Control device 50 preferably adopts a smaller rotation angle because a preparation time for collecting foreign object 14 can be further shortened.

In the above-described embodiment, foreign object removing device 30 that removes foreign object 14 has been mainly described as the collecting device, but the present disclosure is not particularly limited thereto, and the collecting device may include a collection section that collects a target object with a collection member, a detection section that detects the target object and periphery of the target object, and a control device including a control section that controls the collection section such that a height of the periphery of the target object detected by the detection section is acquired and the target object is collected at rotation angle θ of the collection member determined according to a position at which the height of the periphery is lower. Also in the collecting device, it is possible to more reliably collect foreign object 14 in consideration of the height of the peripheral obstacle. In addition, in foreign object removing device 30, it is assumed that process material 12 is a mixture obtained by mixing waste material 13, which is a target for recycling such as stone, sand, and concrete, with foreign object 14 including paper, resin, wood, metal, or the like, and foreign object 14 is processed as the target object, but the mixture is not limited to waste material 13 or foreign object 14 as long as the target object contained in the process material is collected. A processing agent and the target object may be any object.

In the above-described embodiment, the present disclosure has been described as foreign object removing device 30 including control device 50, but the present disclosure is not particularly limited thereto, and the present disclosure may be control device 50 itself, a control method of foreign object removing device 30 executed by a computer, a program of the control method, an information processing method executed by control device 50, or a program of the information processing method.

Here, the present disclosure may be configured as follows. For example, the collecting device control method of the present disclosure is a collecting device control method to be executed by a computer, the collecting device control method being for use in a collecting device including a collection section that collects a target object with a collection member, and a detection section that detects the target object and a periphery of the target object, the collecting device control method includes a step of controlling the collection section such that a height of the periphery of the target object detected by the detection section is acquired and the target object is collected at a rotation angle of the collection member determined according to a position at which the height of the periphery is lower.

In the collecting device control method, similarly to the above-described control device, it is possible to more reliably collect the target object by further reducing the influence of the peripheral obstacle. In the control method, various aspects of the above-described control device may be adopted, or a step for achieving each function of the above-described control device may be added.

The present description also discloses a technical idea in which "the control device according to Claim 1 or 2" in Claim 4 as originally filed is changed to "the control device according to any one of Claims 1 to 3", a technical idea in which "the control device according to Claim 1 or 2" in Claim 5 as originally filed is changed to "the control device according to any one of Claims 1 to 4", a technical idea in which "the control device according to Claim 1 or 2" in Claim 6 as originally filed is changed to "the control device according to any one of Claims 1 to 5", a technical idea in which "the control device according to Claim 1 or 2" in Claim 7 as originally filed is changed to "the control device according to any one of Claims 1 to 6", and a technical idea in which "the control device according to Claim 1 or 2" in Claim 8 as originally filed is changed to "the control device according to any one of Claims 1 to 6".

### Industrial Applicability

The present disclosure can be used in technical fields such as recycling of industrial waste.

### Reference Signs List

10: recycling system, 12: process material, 13: waste material, 14: foreign object, 15: primary crusher, 16: primary magnetic separator, 17: screen machine, 18: secondary crusher, 19: secondary magnetic separator, 20 to 25: conveyance device, 30: foreign object removing device, 31: detection section, 32: imaging section, 33: measurement section, 35: support portion, 36: discarding section, 40: removal section, 41: X-axis slider, 43: Y-axis slider, 45: collection section, 46: lifting and lowering section, 48: removal head, 49, 49B: collection member, 50: control device, 51: control section, 52: storage section, 53: collection member information, 61, 61B: mounting section, 62, 62B: base portion, 63, 63B: support shaft, 64, 64B: gripping claw, 65: fixed claw, 71: captured image, 72: captured image, A, A1, A2: peripheral region, D: conveyance direction, G: center of gravity, M: worker, P, P1, P2: operation range, W, W1 to W3: width, θ, θ1, θ2: rotation angle.

## Claims

1. A control device for use in a collecting device including a collection section configured to collect a target object with a collection member, and a detection section configured to detect the target object and a periphery of the target object, the control device comprising:
a control section configured to control the collection section such that a height of the periphery of the target object detected by the detection section is acquired and the target object is collected at a rotation angle of the collection member determined according to a position at which the height of the periphery is lower.

2. The control device according to Claim 1,
wherein the control section is configured to obtain a center of gravity of the target object and acquire the height of the periphery having the center of gravity of the target object as a center.

3. The control device according to Claim 1 or 2,
wherein the control section is configured to acquire the height of the periphery in a range determined according to an operation range in which the target object is collected with the collection member.

4. The control device according to Claim 1 or 2,
wherein the collection member includes multiple gripping claws having different sizes, and
the control section is configured to cause the target object to be collected at a rotation angle of the collection member according to the height and a width of the periphery of the target object.

5. The control device according to Claim 1 or 2,
wherein the control section is configured to adopt a smaller rotation angle when there are multiple candidates for the rotation angle of the collection member.

6. The control device according to Claim 1 or 2,
wherein the collection member includes a pair of gripping claws, and
the control section is configured to obtain a center of gravity of the target object, acquire the height of the periphery having the center of gravity of the target object as a center, set the rotation angle of the collection member in accordance with a pair of positions at which the height of the periphery is lower, and control the collection section such that the collection member is rotated at the set rotation angle to collect the target object.

7. A foreign object removing device as the collecting device, the foreign object removing device comprising:
a collection section configured to collect a foreign object as the target object with a collection member, the foreign object being included in a member conveyed by a conveyance device in a conveyance direction;
a detection section provided upstream of the collection section in the conveyance direction and configured to detect the foreign object; and
the control device according to Claim 1 or 2.

8. A collecting device comprising:
a collection section configured to collect a target object with a collection member;
a detection section configured to detect the target object and a periphery of the target object; and
the control device according to Claim 1 or 2.

9. A collecting device control method to be executed by a computer, the collecting device control method being for use in a collecting device including a collection section configured to collect a target object with a collection member, and a detection section configured to detect the target object and a periphery of the target object, the collecting device control method comprising:
a step of controlling the collection section such that a height of the periphery of the target object detected by the detection section is acquired and the target object is collected at a rotation angle of the collection member determined according to a position at which the height of the periphery is lower.
